# EUROPEAN PATENT SPECIFICATION

(11) **EP 2 472 378 B1**
(45) Date of publication and mention of the grant of the patent: **11.04.2018**
(21) Application number: 11183131.9
(22) Date of filing: 28.09.2011
(51) Int. Cl.: G06F 3/0488, G06F 3/0483, G06F 3/0485, G06F 3/0481

(54) **Mobile terminal and controlling method thereof**
Mobiles Endgerät und Steuerungsverfahren dafür
Terminal mobile et son procédé de contrôle

(30) Priority: 04.01.2011 KR 20110000469
(43) Date of publication of application: 04.07.2012
(73) Proprietor: LG Electronics Inc., Seoul 07336 (KR)
(72) Inventor: Shim, Minsik, 153-801 Seoul (KR); Park, Hyunjung, 153-801 Seoul (KR); Kim, Sumi, 153-801 Seoul (KR)
(74) Representative: Ter Meer Steinmeister & Partner

(56) References cited:
- WO-A2-03/079661
- WO-A2-2009/032638
- US-A1- 2009 002 335
- US-A1- 2010 295 789
- US-A1- 2010 299 598

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for facilitating a terminal to be used in further consideration of user's convenience.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

There needs to be a User Interface circumstance where a terminal user is enable to arrange a desired object (e.g., an application icon, a file icon, a menu icon, a widget, etc.) on a desired one of a plurality of home screens more conveniently to suit terminal user's taste, and a desired one of a plurality of the home screens of a mobile terminal can be displayed in a standby mode.

US 2010/299598 A1 describes a method for providing pages and a portable terminal adapted thereto are disclosed. The display unit displays pages belonging to a same category or a different category, according to the generation of different input signals, wherein pages are displayed in accordance with their arrangement within a corresponding category

WO 2009/032638 A2 describes methods, systems, and apparatus, including computer program products, for presenting user interface elements. A first page of one or more user interface elements is presented on a touch-sensitive display. Each of the user interface elements corresponds to a respective application. A gesture performed on the touch-sensitive display is detected. In response to the detected gesture, a second page of one or more user interface elements is presented on the touch sensitive display.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which a terminal user is enable to arrange a desired object (e.g., an application icon, a file icon, a menu icon, a widget, etc.) on a desired one of a plurality of home screens more conveniently to suit terminal user's taste.

Another object of the present invention is to provide a mobile terminal and controlling method thereof, by which a desired one of a plurality of the home screens of a mobile terminal can be displayed in a standby mode.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings. The object is solved by the features of the independent claims.

Preferably, a mobile terminal, in which a first order and a second order are determined for a plurality of home screens, according to the present invention includes a touchscreen, and a controller configured to arrange a first order and a second order for a plurality of home screens, if a first touch action is performed on the touchscreen, sequentially display the plurality of the home screens on the touchscreen in the first order, and if a second touch action is performed on the touchscreen, sequentially display the plurality of the home screens on the touchscreen in the second order.

Preferably, a method of controlling a mobile terminal according to the present invention includes arranging a first order and a second order for a plurality of home screens, if a first touch action is performed on a touchscreen, sequentially displaying a plurality of the home screens on the touchscreen in the first order, and if a second touch action is performed on the touchscreen, sequentially displaying a plurality of the home screens on the touchscreen in the second order.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
FIG. 1 is a block diagram of a mobile terminal according to an embodiment of the present invention;
FIG. 2A is a front perspective diagram of a mobile terminal according to an embodiment of the present invention;
FIG. 2B is a rear perspective diagram of a mobile terminal according to an embodiment of the present invention;
FIG. 3 is a diagram for examples of home screens displayable in a mobile terminal according to an embodiment of the present invention;
FIG. 4 is a flowchart for a method of controlling a mobile terminal according to an embodiment of the present invention;
FIGs. 5 to 8 are diagrams of screen configurations for implementing a method of controlling a mobile terminal according to an embodiment of the present invention;
FIG. 9 and FIG. 10 are diagrams of screen configurations for implementing a method of controlling a mobile terminal
FIG. 11 is a diagram of screen configurations for implementing a method of controlling a mobile terminal according to an embodiment of the present invention;
FIG. 12 is a diagram of screen configurations for implementing a method of controlling a mobile terminal according to an embodiment of the present invention;
FIG. 13 is a diagram of screen configurations for implementing a method of controlling a mobile terminal
FIG. 14 is a flowchart for a method of controlling a mobile terminal and
FIG. 15 is a diagram of screen configurations for implementing a method of controlling a mobile terminal

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of terminals. Examples of such terminals include mobile terminals, such as mobile phones, user equipment, smart phones, mobile computers, digital broadcast terminals, personal digital assistants, portable multimedia players (PMP) and navigators.

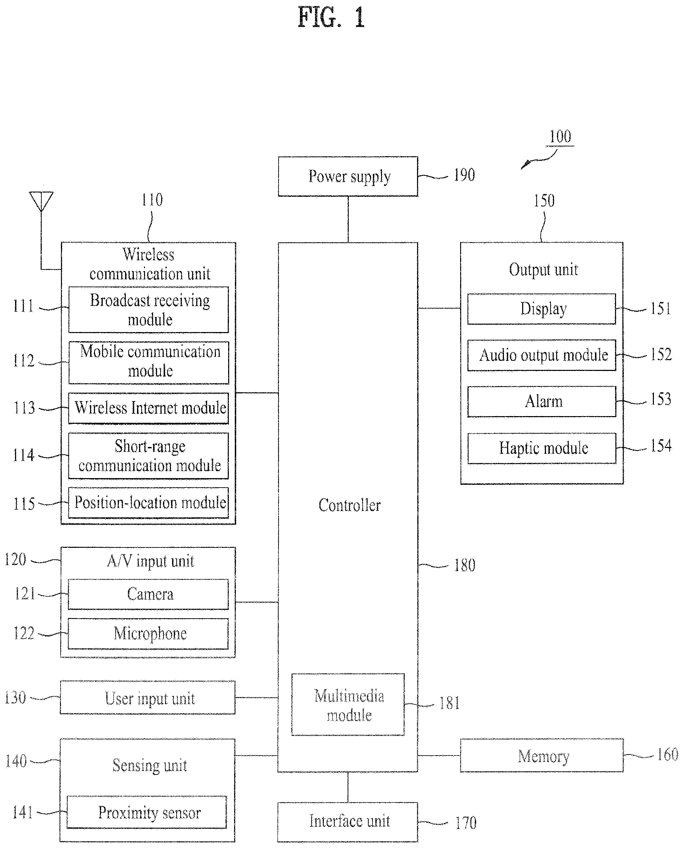

FIG. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

At least two broadcast receiving modules 111 can be provided to the mobile terminal 100 in pursuit of simultaneous receptions of at least two broadcast channels or broadcast channel switching facilitation.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.) via a mobile network such as GSM(Global System for Mobile communications), CDMA(Code Division Multiple Access), WCDMA(Wideband CDMA) and so on. Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), GSM, CDMA, WCDMA, LTE (Long Term Evolution) etc.

Wireless internet access by Wibro, HSPDA, GSM, CDMA, WCDMA, LTE or the like is achieved via a mobile communication network. In this aspect, the wireless internet module 113 configured to perform the wireless internet access via the mobile communication network can be understood as a sort of the mobile communication module 112.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

According to the current technology, the GPS module 115 is able to precisely calculate current 3-dimensional position information based on at least one of longitude, latitude and altitude and direction (or orientation) by calculating distance information and precise time information from at least three satellites and then applying triangulation to the calculated information. Currently, location and time informations are calculated using three satellites, and errors of the calculated location position and time informations are then amended using another satellite. Besides, the GPS module 115 is able to calculate speed information by continuously calculating a real-time current location.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, and a haptic module 154 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and a sensor for detecting a touch action (hereinafter called 'touch sensor') configures a mutual layer structure (hereinafter called 'touchscreen'), it is able to use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

Referring to FIG. 1, a proximity sensor (141) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hot/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

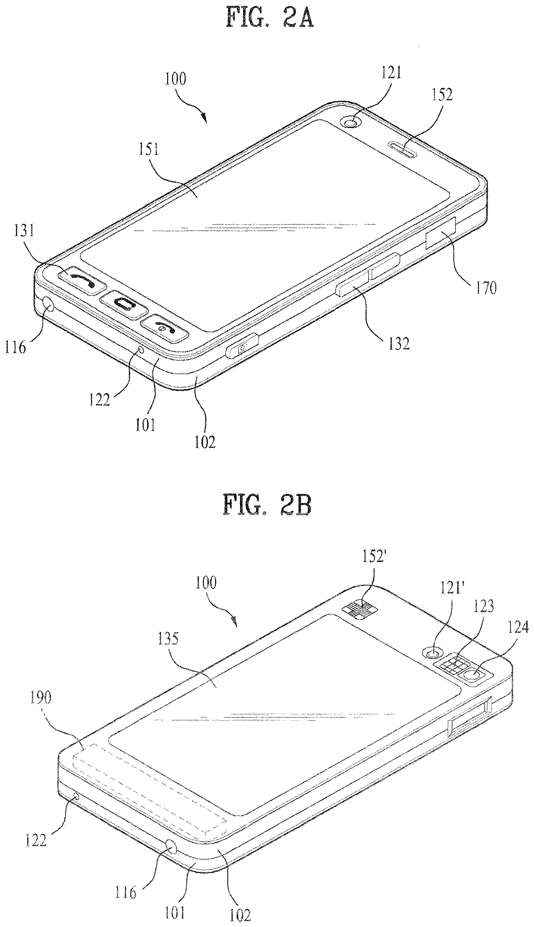

FIG. 2A is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 of Fig. 1 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

FIG. 2B is a perspective diagram of a backside of the terminal shown in FIG. 2A.

Referring to FIG. 2B, a camera 121' can be additionally provided to a backside of the terminal body, and more particularly, to the rear case 102. The camera 121 has a photographing direction that is substantially opposite to that of the former camera 121 shown in FIG. 2A and may have pixels differing from those of the former camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display 151. In this case, if the display 151 is configured to output visual information from its both faces, it is able to recognize the visual information via the touchpad 135 as well. The information outputted from both of the faces can be entirely controlled by the touchpad 135. Alternatively, a display is further provided to the touchpad 135 so that a touchscreen can be provided to the rear case 102 as well.

The touchpad 135 is activated by interconnecting with the display 151 of the front case 101. The touchpad 135 can be provided in rear of the display 151 in parallel. The touchpad 135 can have a size equal to or smaller than that of the display 151.

In the following description, embodiments related to a controlling method, which can be implemented in the above-configured mobile terminal, are explained with reference to the accompanying drawings.

If the display module 151 includes a touchscreen, implementation of the following embodiment is further facilitated. Therefore, the following description is made on the assumption that the display module 151 includes a touchscreen. And, a display screen of the touchscreen 151 is indicated by a reference number 400 in the following description.

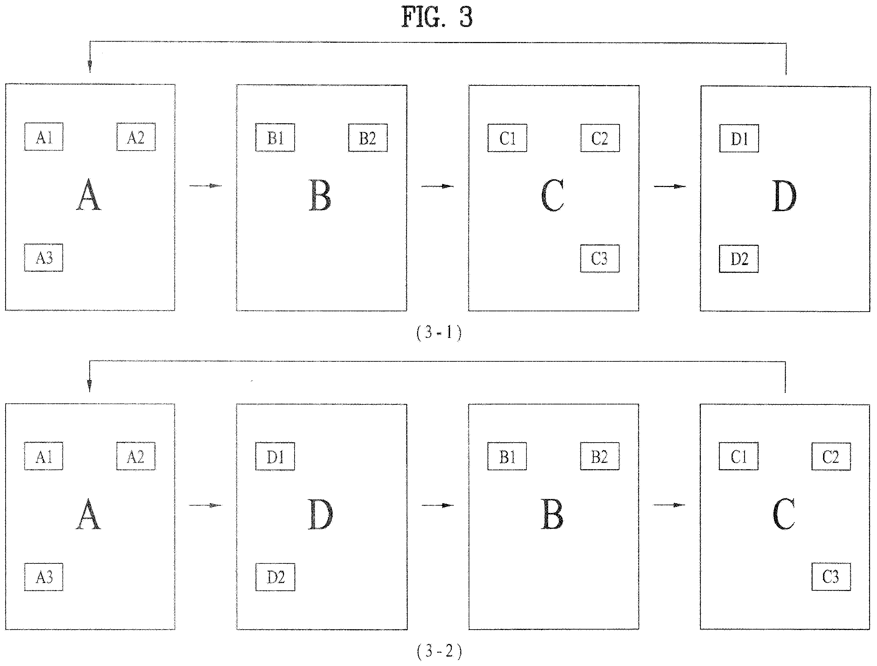

Home screens displayable on a mobile terminal in a standby mode according to the present invention are described with reference to FIG. 3 as follows.

FIG. 3 is a diagram for examples of home screens displayable in a mobile terminal according to the present invention.

Referring to FIG. 3, while the mobile terminal 100 is in a standby mode, the controller 180 is able to control a standby screen to be displayed on the touchscreen. That is, after at least two or more home screens are prepared for the standby screen in advance, the controller 180 controls one of the home screens to be displayed as the standby screen or is able to control one of the home screens to be displayed in a manner of being included in the standby screen.

In the following description, assume that four home screens (i.e., home screens A to D) are prepared in advance.

It is apparent to those skilled in the art that a new home screen is generated from the mobile terminal 100 by a user manipulation. And, it is also apparent to those skilled in the art that an existing home screen can be deleted from the mobile terminal 100. For clarity of the following description, details of the generation and deletion of home screens shall be omitted from the following description.

Meanwhile, it is able to determine the order of at least two of the four home screens.

For instance, the order of the four home screens can be determined in accordance with the generated hour of each of the four home screens. Alternatively, the order of the four home screens can be determined in accordance with the number of objects included in each of the four home screens. Alternatively, the order of the four home screens can be determined in accordance with an accumulative time for displaying each of the four home screens as a standby screen.

That is, the four home screens can have various kinds of orders in accordance with different references.

In the following description, assume that a first order and a second order are determined for the four home screens.

Referring to FIG. 3 (3-1), assume that the first order is the order of 'home screen A → home screen B → home screen C → home screen D'. In this case, the first order can include a cyclic order in which the home screen A follows the home screen D.

Referring to FIG. 3 (3-2), assume that the second order is the order of 'home screen A → home screen D → home screen B → home screen C'. In this case, the second order can include a cyclic order in which the home screen A follows the home screen C.

Besides, any reference can be used to determine the first order or the second order.

Referring to FIG. 3 (3-1) and FIG. 3 (3-2), assume that the home screen A includes an object A1, an object A2 and an object A3. Assume that the home screen B includes an object B1 and an object B2. Assume that the home screen C includes an object C1, an object C2 and an object C3. And, assume that the home screen D includes an object D1, an object D2 and an object D3.

In FIG. 3, exemplarily shown is that identity indicators A, B, C and D for identifying home screens are displayed as texts within the home screens, respectively, by which the present embodiment is non-limited. In particular, the corresponding identity indicator is displayed as numeral, symbol or graphic within each of the home screens. Alternatively, the identity indicator may not be displayed within the corresponding home screen.

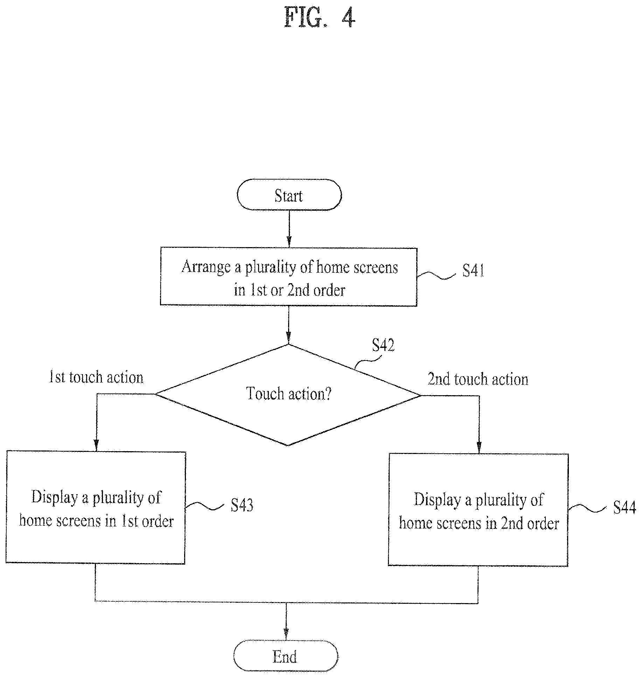

In the following description, when the mobile terminal is in a standby mode, a process for displaying the home screen on the touchscreen sequentially in a first or second order in accordance with a user manipulation is explained with reference to FIGs. 4 to 8.

FIG. 4 is a flowchart for a method of controlling a mobile terminal according to an embodiment of the present invention. In Fig. 4, the method starts with arranging a plurality of home screens in a first or second order (S41). Next, a touch is detected and determined to be one of a first touch or a second touch (S42). If the touch is the first touch, the plurality of screens are shown in the first order (S43). If the touch is the second touch, the plurality of screens are shown in the second order (S44).

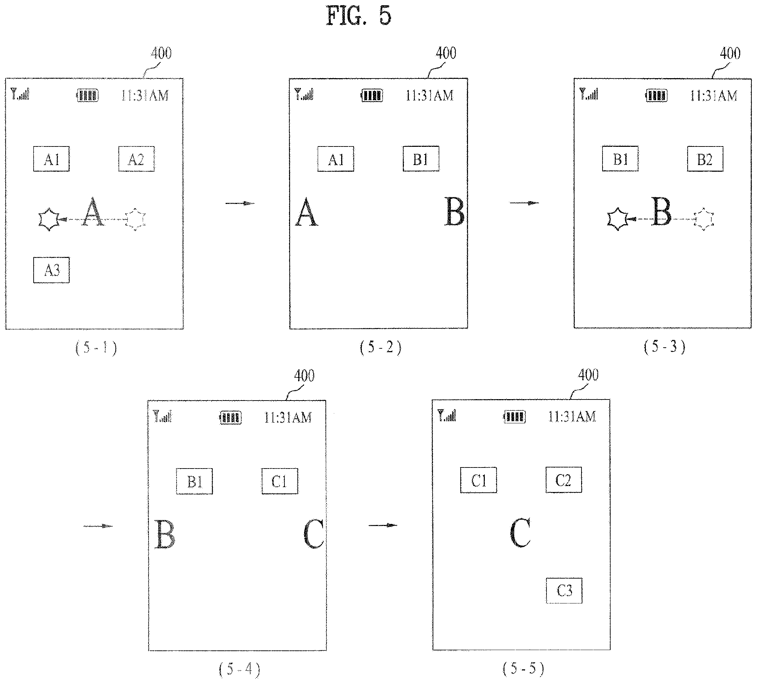

FIGs. 5 to 8 are diagrams of screen configurations for implementing a method of controlling a mobile terminal according to an embodiment of the present invention.

Referring to FIGs. 4 to 8, as mentioned in the foregoing description, a first order and a second order for a plurality of the home screens can be determined in the mobile terminal [S41].

Referring to FIG. 5 (5-1), the mobile terminal 100 is in a standby mode and the home screen A can be displayed on the touchscreen 400.

While the home screen A is displayed on the touchscreen 400, a first touch action previously set can be performed on the touchscreen 400 [S42]. In this case, the touch action can include one of a simple touch, a long touch, a double touch, a touch & drag (in a specific direction), a flicking (in a specific direction) and the like. And, the first touch action can include any one of a simple touch, a long touch, a double touch, a touch & drag, a flicking and the like. In FIG. 5, assume that the first touch action includes the touch & drag in a horizontal direction from the right to the left (5-1).

Referring to FIG. 5 (5-2) and FIG. 5 (5-3), in response to the first touch action, the controller 180 is able to control the home screen A to be switched to the home screen B on the touchscreen 400 in accordance with the first order [S43]. In particular, the home screen A disappears from the touchscreen 400 in the horizontal direction from the right to the left and the home screen B can be displayed in accordance with the first order instead of the disappearing home screen A.

Alternatively, the first touch action can include a touch & drag in a horizontal direction from the left to the right [not shown in the drawing]. If so, the controller 180 is able to control the home screen A to be switched to the home screen D on the touchscreen 400 in accordance with an order reverse to the first order. In particular, the home screen A disappears from the touchscreen 400 in the horizontal direction from the left to the right and the home screen D can be displayed in an order reverse to the first order instead.

Referring to FIG. 5 (5-3), while the home screen B is displayed on the touchscreen 400, the first touch action (i.e., the touch & drag in the horizontal direction from the left to the right) can be performed again on the touchscreen 400 [S42].

If so, referring to FIG. 5 (5-4) and FIG. 5 (5-5), in response to the first touch action, the controller 180 is able to control the home screen B to be switched to the home screen C on the touchscreen 400 in accordance with the first order [S43]. In particular, the home screen B disappears from the touchscreen 400 in the horizontal direction from the right to the left and the home screen C can be displayed in accordance with the first order instead of the disappearing home screen B.

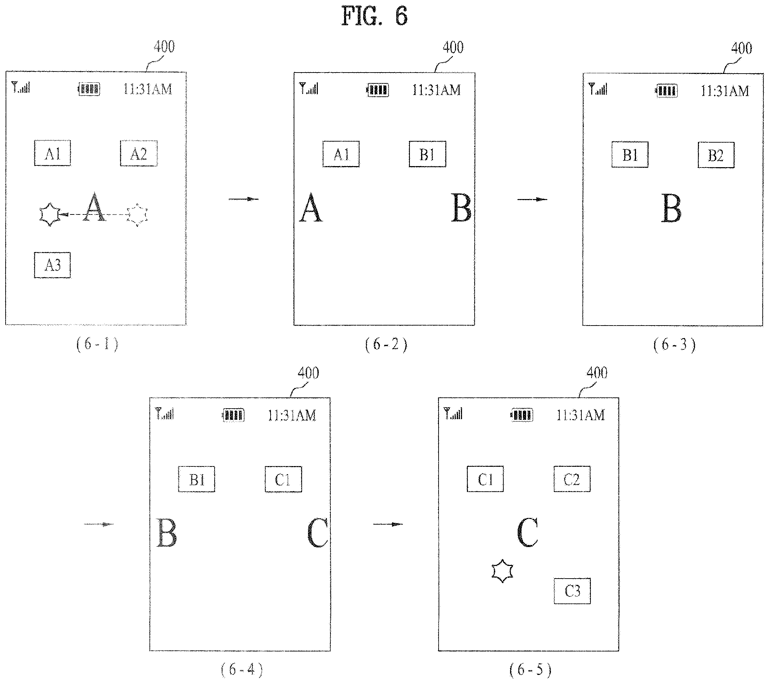

In FIG. 5, shown is that the home screens are displayed in the first order one by one each time the first touch action is performed on the touchscreen 400, by which the present embodiment is non-limited. This is explained in detail with reference to FIG. 6.

Referring to FIG. 6 (6-1), the mobile terminal 100 is in a standby mode and the home screen A can be displayed on the touchscreen 400.

While the home screen A is displayed on the touchscreen 400, a touch & drag in a right-to-left horizontal direction can be performed as a first touch action on the touchscreen 400 [S43].

Referring to FIG. 6 (6-2) and FIG. 6 (6-3), in response to the first touch action, the controller 180 is able to control the home screen A to be switched to the home screen B on the touchscreen 400 in accordance with the first order.

After the home screen A has been switched to the home screen B, referring to FIG. 6 (6-3) and FIG. 6 (6-4), the controller 180 is ale to control the home screen B to be switched to the home screen C on the touchscreen 400 in accordance with the first order.

That is, when the first touch action is performed, a plurality of the home screens can be consecutively displayed on the touchscreen 400 at a first speed in accordance with the first order in the right-to-left horizontal direction [S43].

In this case, the first touch action can include a touch & drag in the left-to-right horizontal direction [not shown in the drawing]. If so, a plurality of the home screens can keep being consecutively displayed on the touchscreen 400 at the first speed in accordance with an order reverse to the first order in the left-to-right horizontal direction.

While a plurality of the home screens keep being consecutively displayed, a stop touch action for stopping the consecutive display can be performed on the touchscreen 400. In this case, the stop touch action can include any touch action. In particular, FIG. 6 (6-5) exemplarily shows that the stop touch action includes a simple touch performed on the touchscreen 400.

In response to the stop touch action, referring to FIG. 6 (6-5), the controller 180 is able to control a plurality of the home screens to stop being consecutively displayed.

That is, the controller 180 is able to control a plurality of the home screens to keep being consecutively displayed in the first order after the first touch action until the stop touch action. After the home screens have stopped being consecutively displayed, the home screen, which is displayed on the touchscreen at the timing point of the stop touch action, is held and can keep being displayed.

If the home screens B and C are being simultaneously displayed in part at the timing point of the stop touch action for example, the controller 180 is able to control either the home screen B or the home screen C, which is displayed on the touchscreen more than the other at the timing point of the stop touch action, to be held and keep being displayed.

After the first touch action, while a plurality of the home screens keep being consecutively displayed in the first order at the first speed, the first touch action (e.g., the right-to-left touch & drag) can be performed on the touchscreen 400 once again.

In response to the first touch action performed once more, the controller 180 is able to control a plurality of the home screens to be consecutively displayed at a second speed higher than the first speed until the stop touch action is performed.

Alternatively, while a plurality of the home screens are consecutively displayed on the touchscreen 400 at the first speed in the first order, a touch & drag can be performed as the first touch action on the touchscreen in a left-to-right direction. If the touch & drag is performed, the controller 180 is able to control a plurality of the home screens to be consecutively displayed on the touchscreen 400 at the first speed in the left-to-right horizontal direction in accordance with an order receiver to the first order.

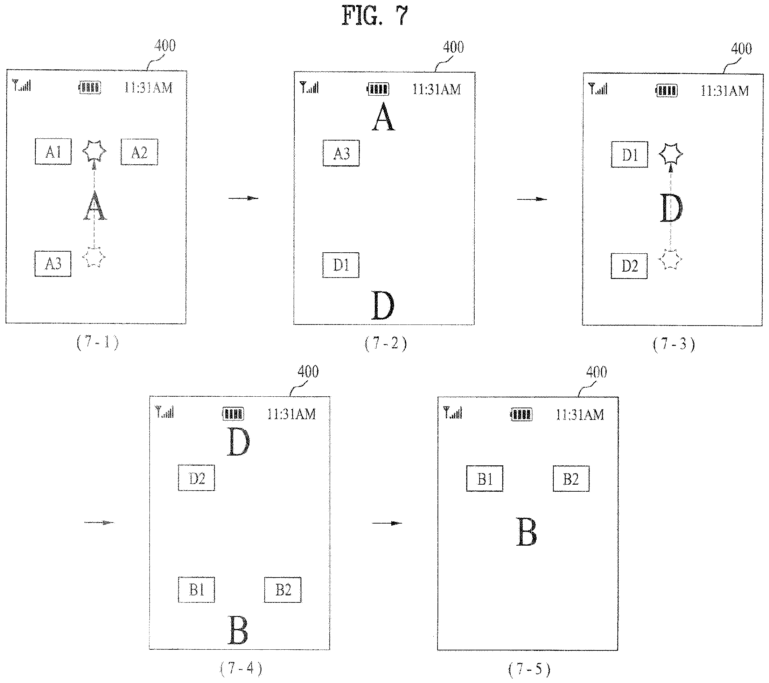

Meanwhile, referring to FIG. 7 (7-1), while the home screen A is displayed on the touchscreen 400, a second touch action previously set can be performed on the touchscreen 400 [S42]. In this case, as mentioned in the foregoing description, the touch action can include one of a simple touch, a long touch, a double touch, a touch & drag, a flicking and the like. And, the second touch action can include any one of a simple touch, a long touch, a double touch, a touch & drag, a flicking and the like. In FIG. 7, assume that the second touch action includes the touch & drag in a vertical direction from the bottom to the top.

Referring to FIG. 7 (7-2) and FIG. 7 (7-3), in response to the second touch action, the controller 180 is able to control the home screen A to be switched to the home screen D on the touchscreen 400 in accordance with the second order [S44]. In particular, the home screen A disappears from the touchscreen 400 in the vertical direction from the bottom to the top and the home screen D can be displayed in accordance with the second order instead of the disappearing home screen A.

Alternatively, the second touch action can include a touch & drag in a vertical direction from the top to the bottom [not shown in the drawing]. If so, the controller 180 is able to control the home screen A to be switched to the home screen C on the touchscreen 400 in accordance with an order reverse to the second order. In particular, the home screen A disappears from the touchscreen 400 in the vertical direction from the top to the bottom and the home screen C can be displayed in an order reverse to the second order instead.

Referring to FIG. 7 (7-3), while the home screen D is displayed on the touchscreen 400, the second touch action (i.e., the touch & drag in the vertical direction from the bottom to the top) can be performed again on the touchscreen 400 [S42].

If so, referring to FIG. 7 (7-4) and FIG. 7 (7-5), in response to the second touch action, the controller 180 is able to control the home screen D to be switched to the home screen B on the touchscreen 400 in accordance with the second order [S44]. In particular, the home screen D disappears from the touchscreen 400 in the vertical direction from the bottom to the top and the home screen B can be displayed in accordance with the second order instead of the disappearing home screen D.

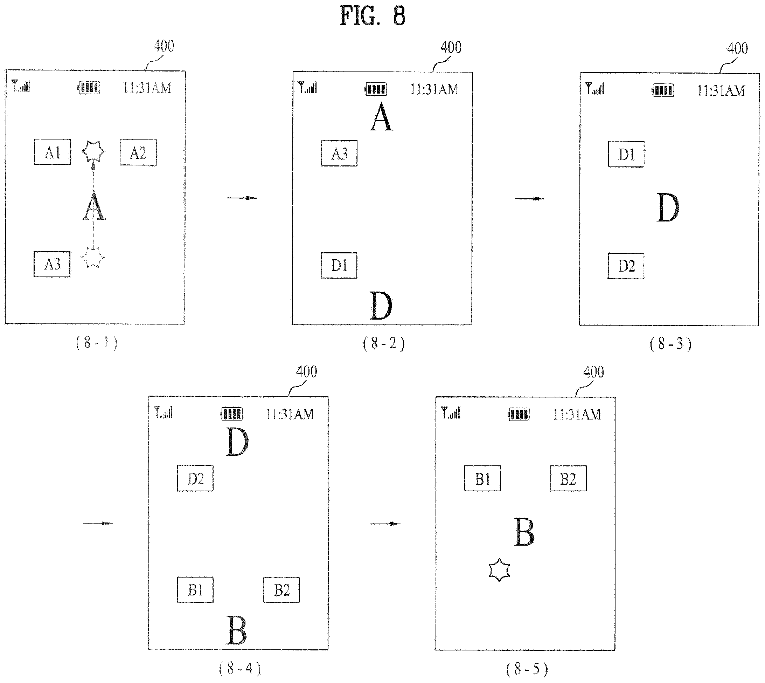

In FIG. 7, shown is that the home screens are displayed in the second order one by one each time the second touch action is performed on the touchscreen 400, by which the present embodiment is non-limited. This is explained in detail with reference to FIG. 8.

Referring to FIG. 8 (8-1), while the home screen A is displayed on the touchscreen 400 (as shown in FIG. 6) (or while a plurality of the home screens keep being consecutively displayed in the first order on the touchscreen 400), a touch & drag in a vertical direction from the bottom to the top can be performed as a second touch action on the touchscreen 400 [S42].

Referring to FIG. 8 (8-2) and FIG. 8 (8-3), in response to the second touch action, the controller 180 is able to control the home screen A to be switched to the home screen D on the touchscreen 400 in accordance with the second order.

After the home screen A has been switched to the home screen D, referring to FIG. 8 (8-3) and FIG. 8 (8-4), the controller 180 is ale to control the home screen D to be switched to the home screen B on the touchscreen 400 in accordance with the second order.

That is, when the second touch action is performed, a plurality of the home screens can be consecutively displayed on the touchscreen 400 at a first speed in accordance with the second order in the bottom-to-top vertical direction [S44].

In this case, the second touch action can include a touch & drag in the top-to-bottom vertical direction [not shown in the drawing]. If so, a plurality of the home screens can keep being consecutively displayed on the touchscreen 400 at the first speed in accordance with an order reverse to the second order in the top-to-bottom vertical direction.

While a plurality of the home screens keep being consecutively displayed, a stop touch action for stopping the consecutive display can be performed on the touchscreen 400. In this case, the stop touch action can include any touch action. In particular, FIG. 8 (8-5) exemplarily shows that the stop touch action includes a simple touch performed on the touchscreen 400.

In response to the stop touch action, referring to FIG. 8 (8-5), the controller 180 is able to control a plurality of the home screens to stop being consecutively displayed.

That is, the controller 180 is able to control a plurality of the home screens to keep being consecutively displayed in the second order after the second touch action until the stop touch action. After the home screens have stopped being consecutively displayed, the home screen, which is displayed on the touchscreen at the timing point of the stop touch action, is held still and can keep being displayed.

If the home screens D and B are being simultaneously displayed in part at the timing point of the stop touch action for example, the controller 180 is able to control either the home screen D or the home screen B, which is displayed on the touchscreen more than the other at the timing point of the stop touch action, to be held still and keep being displayed.

After the second touch action, while a plurality of the home screens keep being consecutively displayed at the first speed in the second order, the second touch action (e.g., the bottom-to-top touch & drag) can be performed on the touchscreen 400 once again.

In response to the second touch action performed once more, the controller 180 is able to control a plurality of the home screens to be consecutively displayed at a second speed higher than the first speed until the stop touch action is performed.

Alternatively, while a plurality of the home screens are consecutively displayed on the touchscreen 400 at the first speed in the second order, a touch & drag can be performed as the second touch action on the touchscreen in a top-to-bottom direction. If the touch & drag is performed, the controller 180 is able to control a plurality of the home screens to be consecutively displayed on the touchscreen 400 at the first speed in the top-to-bottom vertical direction in accordance with an order receiver to the second order.

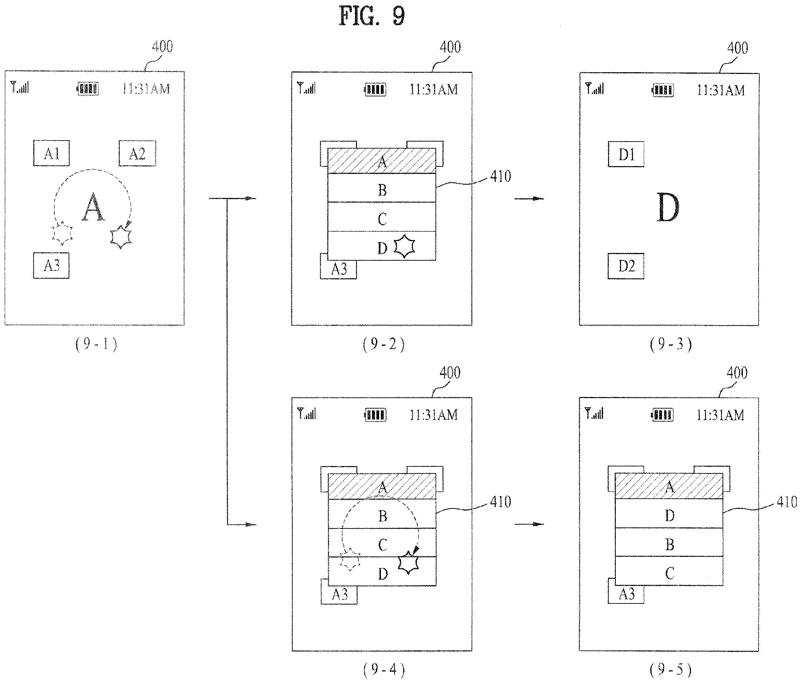

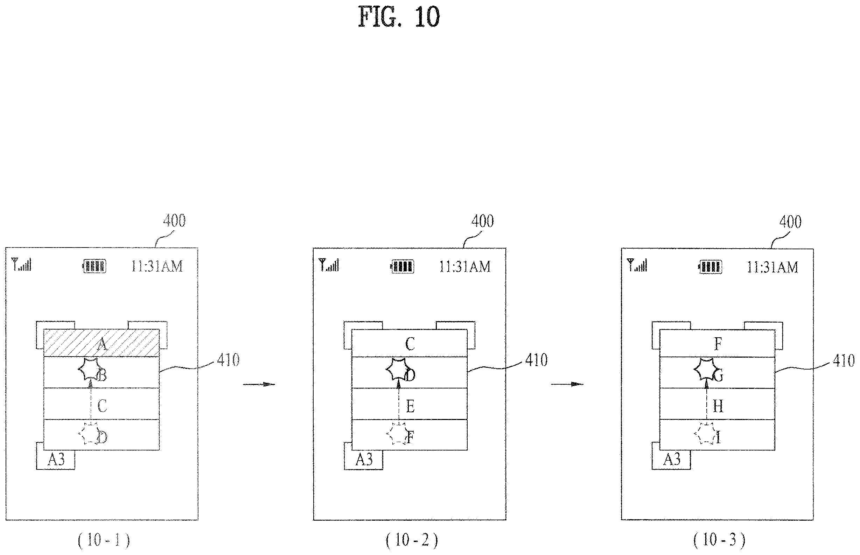

According to the above description, if multiple home screens are sequentially displayed on the touchscreen 400 in the first or second order, a user is able to display a desired one of a plurality of the home screens on the touchscreen, by which the present embodiment is non-limited. For instance, after a list of a plurality of the home screens is displayed on the touchscreen 400, a desired home screen can be displayed on the touchscreen 400 via the list. This is explained in detail with reference to FIG. 9 and FIG. 10 as follows.

FIG. 9 and FIG. 10 are diagrams of screen configurations for implementing a method of controlling a mobile terminal.

Referring to FIG. 9 (9-1), while the home screen A is displayed on the touchscreen 400, a third touch action previously set can be performed on the touchscreen 400. In this case, as mentioned in the foregoing description, the touch action can include one of a simple touch, a long touch, a double touch, a touch & drag, a flicking and the like. And, the third touch action can include any one of a simple touch, a long touch, a double touch, a touch & drag, a flicking and the like. In FIG. 7, assume that the third touch action includes a circular touch & drag in a clockwise direction.

If so, referring to FIG. 9 (9-2), in response to the third touch action, a home screen list 410, on which a plurality of the home screens are listed, can be displayed on the touchscreen 400. In this case, the home screens can be listed in a first order on the home screen list 410. In particular, the home screen, which is currently displayed on the touchscreen 400, on the home screen list, i.e., the home screen A can be displayed in a manner of being visually discriminated from the rest of the home screens.

Thereafter, the home screen D can be touched and selected from the home screen list.

If the home screen D is selected, the controller 180 is able to control the selected home screen D to be displayed on the touchscreen 400.

Meanwhile, while the home screen list 410 is being displayed, referring to FIG. 9 (9-4), the third touch action can be performed on the touchscreen 400 one more time.

If the third touch action is performed once more, referring to FIG. 9 (-5), the controller 180 is able to control a plurality of the home screens to be listed in a second order on the home screen list 410.

According to the above description, the number of a plurality of the home screens is assumed as a relatively small number, i.e., 4. Therefore, there is no difficulty in listing the four home screens on the home screen list 410. Yet, it may be difficult for a plurality of the home screens to be simultaneously listed on the home screen list 410. This is explained in detail with reference to FIG. 10 as follows.

Referring to FIG. 10 (10-1), the home screen 410 can be displayed on the touchscreen 400.

In doing so, a touch & drag can be performed as the second touch action on the touchscreen 400 in a vertical direction from the bottom to the top.

In response to the second touch action, referring to FIG. 10 (10-2), the controller 180 is able to control a plurality of the home screens to keep being scrolled on the home screen list 410 at a first speed along the touch & drag direction.

While a plurality of the home screens are being scrolled on the home screen list 410 at the first speed, a touch & drag can be performed one more as the second touch action on the touchscreen 400 in the vertical direction from the bottom to the top.

In response to the second touch action performed once more, referring to FIG. 10 (10-3), the controller 180 is able to control a plurality of the home screens to keep being scrolled on the home screen list 410 at a second speed along the touch & drag direction.

That is, the listed home screens can keep being scrolled on the home screen list 410 until the above-mentioned stop touch action is performed.

Scrolling the listed home screens on the home screen list 410 can correspond to the former description of keeping displaying a plurality of the home screens on the touchscreen 400 consecutively according to the first or second order with reference to FIG. 6 or FIG. 8. Therefore, the touch action, which is described with reference to FIG. 6 or 8 in association with a plurality of the home screens keeping being consecutively displayed according to the first or second order, can be exactly applied to the scrolling of the listed home screens on the home screen list 410 in Fig. 10.

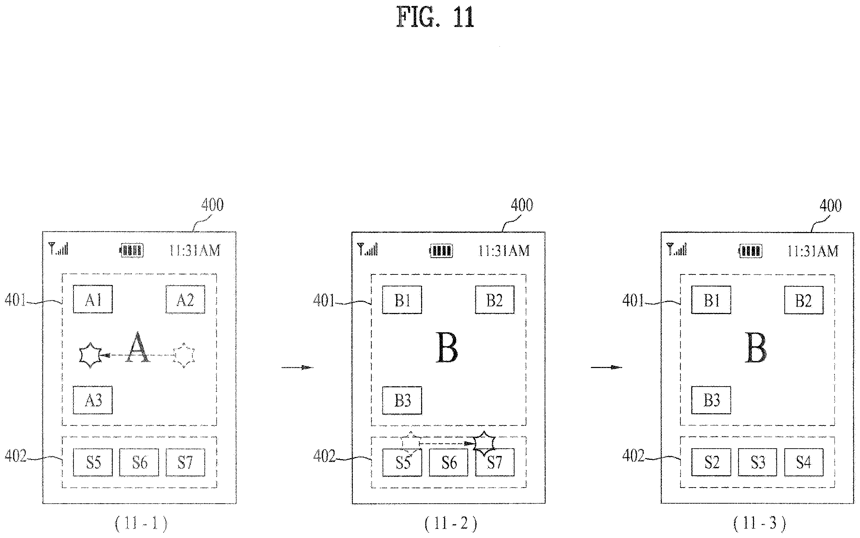

According to the above description, when at least one or more objects exist on the touchscreen, all of the at least one or more objects belong to a first home screen. When the first home screen is switched to a second home screen, all of the at least one or more objects disappear from the touchscreen, by which the present embodiment is non-limited. When at least one or more objects exist on the touchscreen, all of the at least one or more objects need not belong to the first home screen. Therefore, when the first home screen is switched to the second home screen, the object failing to belong to the first home screen can remain on the touchscreen as it is. This is explained in detail with reference to FIG. 11 as follows.

FIG. 11 is a diagram of screen configurations for implementing a method of controlling a mobile terminal according to an embodiment of the present invention.

Referring to FIG. 11 (11-1), the touchscreen 400 can be partitioned in to two regions, i.e., a first region 401 and a second region 402. In particular, the first region 401 and the second region 402 can be displayed on the touchscreen 400 in a manner of being visually and clearly discriminated from each other. Optionally, the first region 401 and the second region 402 may not be discriminated from each other visually and clearly because they virtually exist on the touchscreen 400.

The home screen A can be displayed on the first region 401. When the home screen A is displayed on the first region 401, at least some (e.g., object S5, object S6, object S7) of objects failing to belong to any one of a plurality of the home screens can be displayed on the second region 402. In the following description, the object failing to belong to any one of a plurality of the home screens shall be named an independent object. In particular, the independent object can include a favorite object previously set by a terminal manufacturer or a terminal user. Alternatively, the independent object can include an object of an application or menu running by multitasking as a background when the mobile terminal is in the standby mode.

If the independent object is touched and selected, it is able to perform the same menu or function of one of the objects belonging to a plurality of the home screens. That is, the independent object can include a copy of one of the objects belonging to a plurality of the home screens. Alternatively, when the independent object is touched and selected, the independent object is able to perform a function different from that of any of the objects belonging to a plurality of the home screens.

Meanwhile, a touch & drag in a right-to-left horizontal direction can be performed as a first touch action on the first region 401 of the touchscreen 400.

In response to the first touch action on the first region 401, referring to FIG. 11 (11-2), the controller 180 is able to control the home screen A to be switched to the home screen B on the first region 401 of the touchscreen 400 in accordance with a first order.

Despite that the home screen A is switched to the home screen B, the controller 180 is able to control the independent objects (i.e., the object S5, the object S6, the object S7), which are being displayed on the second region 402, to be maintained.

Meanwhile, a touch & drag in a left-to-right horizontal direction can be performed as a first touch action on the second region 402 of the touchscreen 400.

In response to the first touch action on the second region 402, referring to FIG. 11 (11-3), the controller 180 is able to control the independent objects to be scrolled on the second region 402 to correspond to the direction and length of the first touch action. As the independent objects are scrolled, new independent objects (i.e., object S2, object S3, object S4) can be displayed.

Despite that the independent objects are displayed, the controller 180 is able to control the home screen B, which is being displayed on the first region 401, to be maintained.

According to the above description, when the first touch action is performed on the first region, the home screens are switched in the first order, by which the present embodiment is non-limited. Meanwhile, as mentioned in the foregoing description, when the second touch action is performed on the first region, the home screens are switched in the second order [not shown in the drawing]. For clarity of the following description, the corresponding details shall be omitted.

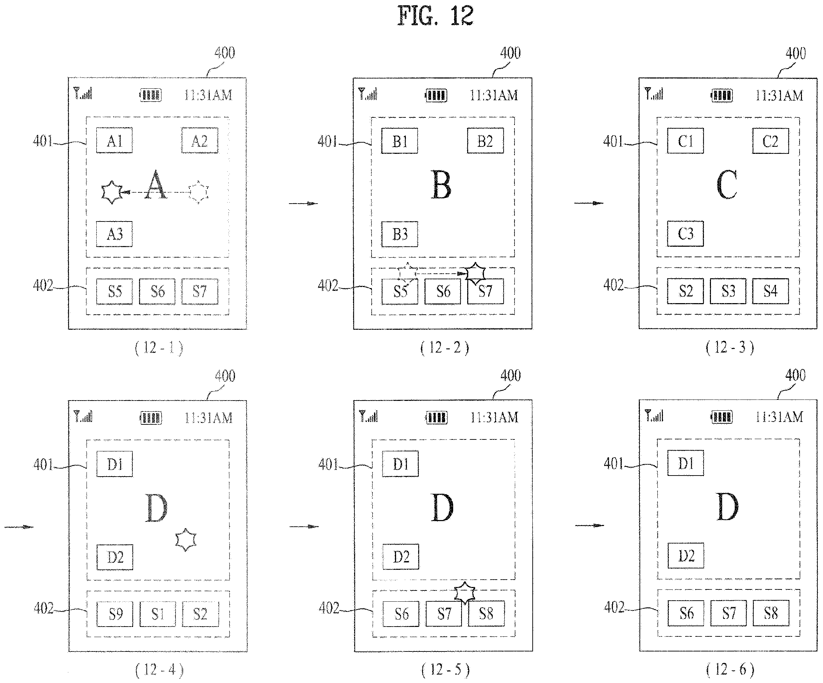

The following description is made with reference to FIG. 12.

FIG. 12 is a diagram of screen configurations for implementing a method of controlling a mobile terminal according to an embodiment of the present invention.

Referring to FIG. 12 (12-1), the home screen A is displayed on a first region 401 of the touchscreen 400. Simultaneously, independent object S5, S6 and S7 can be displayed on a second region 402 of the touchscreen 400.

Subsequently, a touch & drag can be performed as a first touch action on the first region 401 of the touchscreen 400 in a right-to-left horizontal direction.

In response to the first touch action on the first region 401, referring to FIG. 12 (12-2) and FIG. 12 (12-3), the controller 180 is able to control a plurality of the home screens to keep being consecutively displayed on the first region 401 at a first speed in a first order.

Despite that a plurality of the home screens keep being consecutively displayed in the first order, the controller 180 is able to control the independent objects S5, S6 and S7, which are displayed on the second region 402, to be maintained as it is.

While a plurality of the home screens keep being consecutively displayed on the first region 401, a touch & drag can be performed as a first touch action on the second region 402 of the touchscreen 400 in a left-to-right horizontal.

In response to the first touch action on the second region 402, referring to FIG. 12 (12-3) and FIG. 12 (12-4), the controller 180 controls a plurality of the home screens to keep being consecutively displayed on the first region 401 and is also bale to control the independent objects to keep being consecutively scrolled on the second region 402 at the first speed in a left-to-right direction.

While a plurality of the home screens keep being consecutively displayed on the first region 401 and the independent objects keep being consecutively scrolled on the second region 402, the stop touch action can be performed on the first region 401 of the touchscreen 400.

In response to the stop touch action performed on the first region 401, referring to FIG. 12 (12-4) and FIG. 12 (12-5), the controller 180 controls the independent objects to keep being consecutively scrolled on the second region 402 and is also able to control a plurality of the home screens to stop being consecutively displayed on the first region 401.

When a plurality of the home screens stop being consecutively displayed on the first region 401 and the independent objects are consecutively displayed on the second region 402, the stop touch action can be performed on the second region 402 of the touchscreen 400.

In response to the stop touch action performed on the second region 402, referring to FIG. 12 (12-6), the controller 180 is able to control the independent objects to stop being consecutively scrolled on the second region 402 of the touchscreen 400.

In the above description with reference to FIG. 12, a plurality of the home screens are consecutively displayed in the first order in response to the first touch action on the first region 401 of the touchscreen 400, by which the present embodiment is non-limited. In response to the second touch action on the first region 401 of the touchscreen 400, it is a matter of course that a plurality of the home screens can be consecutively displayed in the second order.

The former touch action for displaying a plurality of the home screens consecutively at the second speed and the former touch action for displaying the home screen list consecutively at the second speed are exactly applicable to the first region and the second region shown in FIG. 12.

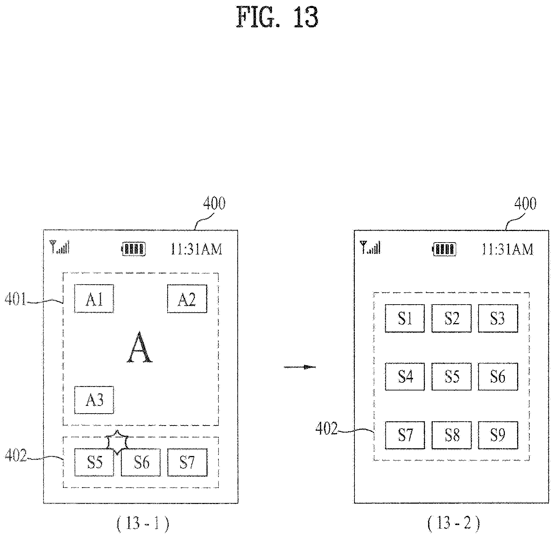

The following description is made with reference to FIG. 13.

FIG. 13 is a diagram of screen configurations for implementing a method of controlling a mobile terminal.

Referring to FIG. 13 (13-1), the home screen A is displayed on a first region 401 of the touchscreen 400. Simultaneously, independent object S5, S6 and S7 can be displayed on a second region 402 of the touchscreen 400. Yet, the independent objects are not scrolled on the second region 402.

Thereafter, a fourth touch action can be performed on an empty space of the second region 402 of the touchscreen 400. In FIG. 13 (13-1), exemplarily shown is that the fourth touch action is a simple touch.

If the fourth touch action is performed, referring to FIG. 13 (13-2), the controller 180 controls the first region 401 to disappear from the touchscreen 400 and is also able to control the second region 402 to be extended. The controller 180 is then able to control more independent objects to be simultaneously displayed on the extended second region 402.

While the second region 402 is displayed on the touchscreen 400 only, if the fourth touch action is performed on the empty space of the second region 402, referring to FIG. 13 (13-1), the controller 180 restores the first region 401 and controls the restored first region 401 to be displayed on the touchscreen 400 together with the second region 402.

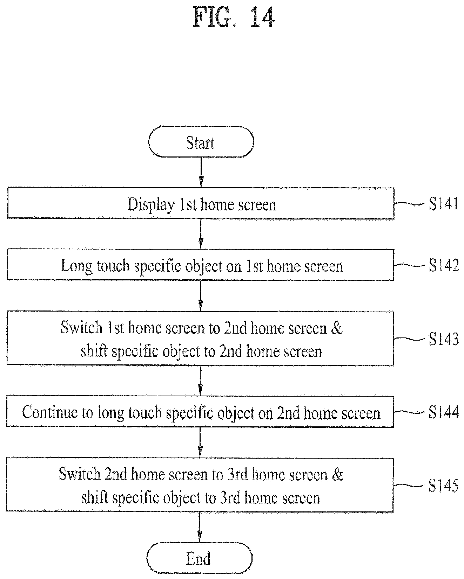

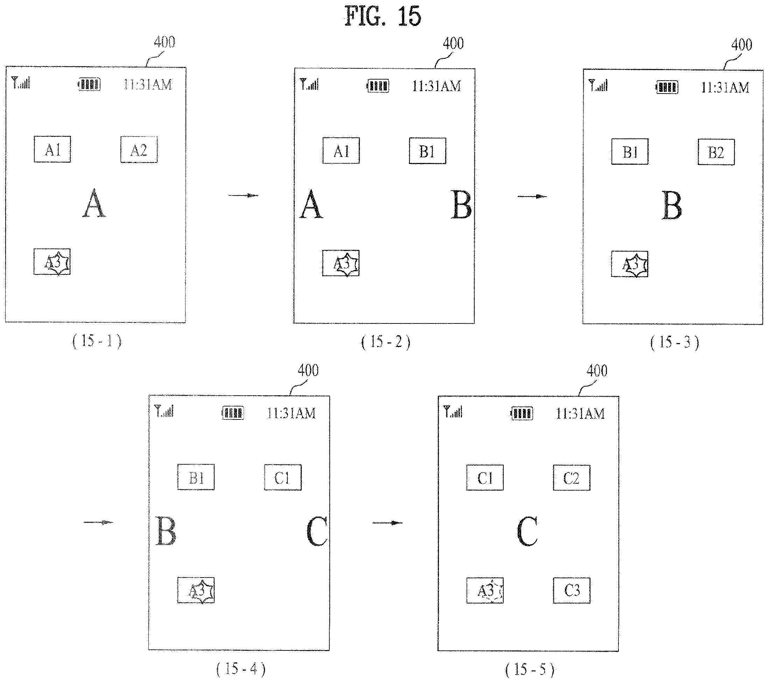

The following description is made with reference to FIG. 14 and FIG. 15.

FIG. 14 is a flowchart for a method of controlling a mobile terminal. And, FIG. 15 is a diagram of screen configurations for implementing a method of controlling a mobile terminal. In Fig. 14, the method starts with displaying a first home screen (S141). Next, a long touch to a specific object is detected on the first home screen (S142). Next, the home screen is switched from the first home screen to a second home screen, with the specific object shifted to the second home screen (S143). Next, the long touch is maintained on the specific object now on the second home screen (S144). Finally, the home screen shifts from the second home screen to a third home screen, with the specific object shifted to the third home screen (S 145).

Referring to FIG. 15 (15-1), the home screen A can be displayed on the touchscreen 400 [S141].

A desired object (e.g., an object A3) within the home screen A can be long touched [S142].

While the long touch to the desired object is maintained, referring to FIG. 15 (15-2) and FIG. 15 (15-3), the controller 180 controls the home screen A to disappear and also control the home screen B to appear, in a first order [S143]. Although the home screen A disappears but the home screen B appears, the controller 180 is able to control the desired object to keep staying at the same position on the touchscreen 400.

Thus, the desired object keeps staying on the touchscreen 400 despite the disappearance of the home screen A and the appearance of the home screen B, which can be understood as the desired object moves away into the home screen B from the home screen A [S143].

The long touch to the desired object having moved away into the home screen B can be kept on the touchscreen 400 [S144].

While the long touch to the desired object is maintained, referring to FIG. 15 (15-4) and FIG. 15 (15-5), the controller 180 controls the home screen B to disappear and controls the home screen C to appear, in accordance with the first order [S145].

Thus, the desired object keeps staying on the touchscreen 400 despite the disappearance of the home screen B and the appearance of the home screen C, which can be understood as the desired object moves away into the home screen C from the home screen B [S145].

Consequently, the desired object is long touched until a desired home screen is displayed on the touchscreen 400, whereby the desired object can be shifted to the desired home screen.

Accordingly, the present invention provides the following effects and/or advantages.

First of all, a terminal user is able to arrange a desired object (e.g., a prescribed application icon, a file icon, a menu icon, a widget, etc.) on a desired one of a plurality of home screens more conveniently to suit terminal user's taste.

Secondly, according to at least one of embodiments of the present invention, a user is able to display a desired one of a plurality of the home screens of a mobile terminal in a standby mode more conveniently.

It will be apparent to those skilled in the art that various modifications and variations can be specified into other forms without departing from the scope of the inventions.

In addition, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). And, the computer can include the controller 180 of the terminal.

It will be apparent to those skilled in the art that various modifications and variations can be made in the present invention.

## Claims

1. A mobile terminal (100) comprising:
a touchscreen (151); and
a controller (180) operatively connected to the touchscreen (151) and configured to:
display (S41) one of a plurality of home screens (A, B, C, D) on the touchscreen (151), wherein the plurality of home screens (A, B, C, D) are arranged in a first cyclic order and in a second cyclic order, a home screen being an arrangement of objects comprising at least one of a file icon, an application icon or a widget;
detect (S42) a first touch action or a second touch action to the touchscreen (151),
**characterized in that** the controller (180) is configured to:
sequentially display the plurality of home screens in a different cyclic order depending on which of the first or second touch action is detected;
wherein the plurality of home screens are sequentially displayed (S43) on the touchscreen (151) in the first cyclic order if the first touch action is detected, and
the plurality of home screens are sequentially displayed (S44) on the touchscreen (151) in the second cyclic order if the second touch action is detected.

2. The mobile terminal of claim 1, wherein the controller (180) is configured to control the plurality of home screens to keep being automatically consecutively displayed after the first touch action or the second touch action is detected once, respectively until a third touch action is detected.

3. The mobile terminal of any one of claims 1 or 2, wherein the controller (180) is configured to control the plurality of home screens to keep being automatically consecutively displayed at a first speed in the first cyclic order if the first touch action is detected.

4. The mobile terminal of claim 3, wherein the controller (180) is configured to control the plurality of home screens to keep being automatically consecutively displayed at the first speed in the second cyclic order if the second touch action is detected while the plurality of home screens are automatically consecutively displayed in the first cyclic order.

5. The mobile terminal of claim 3, wherein the controller (180) is configured to control the plurality of home screens to keep being automatically consecutively displayed in the first cyclic order at a second speed higher than the first speed, if the first touch action is detected a second time, while the plurality of home screens are consecutively displayed in the first cyclic order.

6. The mobile terminal of claim 1, wherein the controller (180) is configured to control the plurality of home screens to be sequentially displayed one by one each time the first touch action or the second touch action is detected.

7. The mobile terminal of any one of claims 1 to 6, wherein the controller (180) is configured to control a home screen list (410) having the plurality of home screens listed thereon to be displayed on the touchscreen (151) if a fourth touch action is detected on the touchscreen (151).

8. The mobile terminal of claim 7, wherein the controller (180) is configured to control the plurality of home screens to be arranged on the home screen list (410) in the first cyclic order or the second cyclic order.

9. The mobile terminal of claim 8, wherein the controller (180) is configured to control the home screen list (410) to continue scrolling at the first speed if the fourth touch action is detected.

10. The mobile terminal of claim 9, wherein the controller (180) is configured to control the home screen list (410) to be scrolled at a second speed higher than the first speed if the fourth touch action is detected once more while the home screen list (410) is being scrolled at the first speed.

11. The mobile terminal of any of claims 1 to 10, wherein the controller (180) is configured to
control a first region (401) and a second region (402) to be previously set on the touchscreen (151),
control the plurality of home screens (A, B, C, D) to be sequentially displayed on the first region (401), and
control preset objects to be displayed on the second region (402).

12. The mobile terminal of claim 11,
wherein the controller (180) is configured to control the plurality of home screens to keep being consecutively displayed on the first region (401) if the first touch action or the second touch action is detected on the first region (401), and
wherein the controller (180) is configured to control the preset objects to be scrolled at a first speed on the second region (402) if the first touch action is detected on the second region (402).

13. The mobile terminal of claim 12, wherein the controller (180) is configured to control the preset objects to be scrolled on the second region (402) at a second speed higher than the first speed if the first touch action is detected on the second region (402) once more.

14. The mobile terminal of claim 12, wherein, if a fifth touch action is detected on an empty space of the second region (402), the controller (180) is configured to
control the first region (401) to disappear from the touchscreen (151),
control the second region (402) to be extended on the touchscreen (151), and
control the preset objects to be displayed on the extended second region (402).

15. A method of controlling a mobile terminal, comprising:
displaying (S41) one of a plurality of home screens (A, B, C, D) on a touchscreen (151) wherein the plurality of home screens (A, B, C, D) are arranged in a first cyclic order and in a second cyclic order, a home screen being an arrangement of objects comprising at least one of a file icon, an application icon or a widget;
detecting (S42) a first touch action or a second touch action to the touchscreen (151);
**characterized by**
sequentially displaying the plurality of home screens in a different cyclic order depending on which of the first touch action and the second touch action is detected;
wherein the plurality of home screens are sequentially displayed (S43) on the touchscreen (151) in the first cyclic order if the first touch action is detected on a touchscreen; and
the plurality of home screens are sequentially displayed (D44) on the touchscreen (151) in the second cyclic order if the second touch action is detected on the touchscreen (151)

## Patentansprüche

1. Mobiles Endgerät (100), aufweisend:
einen Touchscreen (151); und
eine Steuerung (180), die operativ mit dem Touchscreen (151) verbunden ist und ausgelegt ist zum:
Anzeigen (S41) eines von mehreren Startbildschirmen (A, B, C, D) auf dem Touchscreen (151), wobei die mehreren Startbildschirme (A, B, C, D) in einer ersten zyklischen Reihenfolge und in einer zweiten zyklischen Reihenfolge angeordnet sind, wobei ein Startbildschirm eine Anordnung von Objekten ist, die mindestens eines von einem Dateisymbol, einem Anwendungssymbol, oder einem Widget aufweist;
Erkennen (S42) einer ersten Berührungsaktion oder einer zweiten Berührungsaktion auf dem Touchscreen (151),
**dadurch gekennzeichnet, dass** die Steuerung (180) ausgelegt ist zum:
sequentiellen Anzeigen der mehreren Startbildschirme in einer unterschiedlichen zyklischen Reihenfolge, abhängig davon, welche der ersten oder der zweiten Berührungsaktion erkannt wird;
wobei die mehreren Startbildschirme auf dem Touchscreen (151) in der ersten zyklischen Reihenfolge sequentiell angezeigt (S43) werden, wenn die erste Berührungsaktion erkannt wird, und
die mehreren Startbildschirme auf dem Touchscreen (151) in der zweiten zyklischen Reihenfolge sequentiell angezeigt (S44) werden, wenn die zweite Berührungsaktion erkannt wird.

2. Mobiles Endgerät nach Anspruch 1, wobei die Steuerung (180) dazu ausgelegt ist, die mehreren Startbildschirme so zu steuern, dass sie, nachdem die erste Berührungsaktion bzw. die zweite Berührungsaktion einmal erkannt worden ist, automatisch fortlaufend angezeigt werden, bis eine dritte Berührungsaktion erkannt wird.

3. Mobiles Endgerät nach einem der Ansprüche 1 oder 2, wobei die Steuerung (180) dazu ausgelegt ist, die mehreren Startbildschirmen so zu steuern, dass sie automatisch mit einer ersten Geschwindigkeit in der ersten zyklischen Reihenfolge fortlaufend angezeigt werden, wenn die erste Berührungsaktion erkannt wird.

4. Mobiles Endgerät nach Anspruch 3, wobei die Steuerung (180) dazu ausgelegt ist, die mehreren Startbildschirme so zu steuern, dass sie automatisch mit der ersten Geschwindigkeit in der zweiten zyklischen Reihenfolge fortlaufend angezeigt werden, wenn die zweite Berührungsaktion erkannt wird, während die mehreren Startbildschirme automatisch in der ersten zyklischen Reihenfolge fortlaufend angezeigt werden.

5. Mobiles Endgerät nach Anspruch 3, wobei die Steuerung (180) dazu ausgelegt ist, die mehreren Startbildschirme so zu steuern, dass sie automatisch in der ersten zyklischen Reihenfolge mit einer zweiten Geschwindigkeit höher als die erste Geschwindigkeit fortlaufend angezeigt zu werden, wenn die erste Berührungsaktion ein zweites Mal erkannt wird, während die mehreren Startbildschirme in der ersten zyklischen Reihenfolge fortlaufend angezeigt werden.

6. Mobiles Endgerät nach Anspruch 1, wobei die Steuerung (180) dazu ausgelegt ist, die mehreren Startbildschirmen so zu steuern, dass sie sequentiell einer nach dem anderen angezeigt werden, jedes Mal, wenn die erste Berührungsaktion oder die zweite Berührungsaktion erkannt wird.

7. Mobiles Endgerät nach einem der Ansprüche 1 bis 6, wobei die Steuerung (180) dazu ausgelegt ist, eine Startbildschirmliste (410) zu steuern, die die mehreren Startbildschirme, die auf dem Touchscreen (151) angezeigt werden sollen, auflistet, wenn eine vierte Berührungsaktion auf dem Touchscreen (151) erkannt wird.

8. Mobiles Endgerät nach Anspruch 7, wobei die Steuerung (180) dazu ausgelegt ist, die mehreren Startbildschirmen so zu steuern, dass sie auf der Startbildschirmliste (410) in der ersten zyklischen Reihenfolge oder der zweiten zyklischen Reihenfolge angeordnet sind.

9. Mobiles Endgerät nach Anspruch 8, wobei die Steuerung (180) dazu ausgelegt ist, die Startbildschirmliste (410) zu steuern, mit der ersten Geschwindigkeit weiterzuscrollen, wenn die vierte Berührungsaktion erkannt wird.

10. Mobiles Endgerät nach Anspruch 9, wobei die Steuerung (180) dazu ausgelegt ist, die Startbildschirmliste (410) zu steuern, mit einer zweiten Geschwindigkeit höher als die erste Geschwindigkeit gescrollt zu werden, wenn die vierte Berührungsaktion erneut erkannt wird, während die Startbildschirmliste (410) mit der ersten Geschwindigkeit scrollt.

11. Mobiles Endgerät nach einem der Ansprüche 1 bis 10, wobei die Steuerung (180) ausgelegt zum
Steuern eines ersten Bereichs (401) und eines zweiten Bereichs (402), um auf dem Touchscreen (151) vorab festgelegt zu sein,
Steuern der mehreren Startbildschirme (A, B, C, D), um sequentiell auf dem ersten Bereich (401) angezeigt zu werden, und
Steuern von voreingestellten Objekte, um auf dem zweiten Bereich (402) angezeigt zu werden.

12. Mobiles Endgerät nach Anspruch 11,
wobei der Steuerung (180) dazu ausgelegt ist, die mehreren Startbildschirme so zu steuern, dass sie auf dem ersten Bereich (401) fortlaufend angezeigt werden, wenn der erste Berührungsvorgang oder der zweite Berührungsvorgang auf dem ersten Bereich (401) erkannt wird, und
wobei der Steuerung (180) dazu ausgelegt ist, die voreingestellten Objekte so zu steuern, dass sie mit einer ersten Geschwindigkeit auf dem zweiten Bereich (402) gescrollt werden, wenn die erste Berührungsaktion auf dem zweiten Bereich (402) erkannt wird.

13. Mobiles Endgerät nach Anspruch 12, wobei die Steuerung (180) dazu ausgelegt ist, die voreingestellten Objekte so zu steuern, dass sie auf dem zweiten Bereich (402) mit einer zweiten Geschwindigkeit, die höher als die erste Geschwindigkeit ist, gescrollt werden, wenn die erste Berührungsaktion auf dem zweiten Bereich (402) erneut erkannt wird.

14. Mobiles Endgerät nach Anspruch 12, wobei, wenn eine fünfte Berührungsaktion auf einem leeren Zwischenraum des zweiten Bereichs (402) erkannt wird, die Steuerung (180) ausgelegt ist zum
Steuern des ersten Bereichs (401), um von dem Touchscreen (151) zu verschwinden,
Steuern des zweiten Bereichs (402), um auf dem Touchscreen (151) erweitert zu werden, und
Steuern der voreingestellten Objekte, um auf dem erweiterten zweiten Bereich (402) angezeigt zu werden.

15. Verfahren zur Steuerung eines mobilen Endgeräts, aufweisend:
Anzeigen (S41) eines von mehreren Startbildschirmen (A, B, C, D) auf einem Touchscreen (151), wobei die mehreren Startbildschirme (A, B, C, D) in einer ersten zyklischen Reihenfolge und in einer zweiten zyklischen Reihenfolge angeordnet werden, wobei ein Startbildschirm eine Anordnung von Objekten ist, die mindestens eines von einem Dateisymbol, einem Anwendungssymbol, oder einem Widget aufweist;
Erkennen (S42) einer ersten Berührungsaktion oder einer zweiten Berührungsaktion auf den Touchscreen (151);
**gekennzeichnet durch**
sequentielles Anzeigen der mehreren Startbildschirme in einer unterschiedlichen zyklischen Reihenfolge, abhängig davon, welche von der ersten Berührungsaktion und der zweiten Berührungsaktion erkannt wird;
wobei die mehreren Startbildschirme auf dem Touchscreen (151) in der ersten zyklischen Reihenfolge sequentiell angezeigt werden (S43), wenn die erste Berührungsaktion auf einem Touchscreen erkannt wird; und
die mehreren Startbildschirme auf dem Touchscreen (151) in der zweiten zyklischen Reihenfolge sequentiell angezeigt (D44) werden, wenn die zweite Berührungsaktion auf dem Touchscreen (151) erkannt wird.

## Revendications

1. Terminal mobile (100) comprenant :
un écran tactile (151) ; et
un organe de commande (180) raccordé, de manière opérationnelle, à l'écran tactile (151) et configuré pour effectuer :
l'affichage (S41) de l'un d'une pluralité d'écrans d'accueil (A, B, C, D) sur l'écran tactile (151), dans lequel la pluralité d'écrans d'accueil (A, B, C, D) sont agencés dans un premier ordre cyclique et dans un deuxième ordre cyclique, un écran d'accueil étant un agencement d'objets comprenant au moins l'un d'une icône de fichier, d'une icône d'application ou d'un widget ;
la détection (S42) d'une première action de toucher ou d'une deuxième action de toucher sur l'écran tactile (151),
**caractérisé en ce que** l'organe de commande (180) est configuré pour effectuer :
l'affichage séquentiel de la pluralité d'écrans d'accueil dans un ordre cyclique différent selon que la première action de toucher ou la deuxième action de toucher est détectée ;
dans lequel la pluralité d'écrans d'accueil sont séquentiellement affichés (S43) sur l'écran tactile (151) dans le premier ordre cyclique si la première action de toucher est détectée, et
la pluralité d'écrans d'accueil sont séquentiellement affichés (S44) sur l'écran tactile (151) dans le deuxième ordre cyclique si la deuxième action de toucher est détectée.

2. Terminal mobile selon la revendication 1, dans lequel l'organe de commande (180) est configuré pour commander à la pluralité d'écrans d'accueil de rester automatiquement affichés consécutivement après que la première action de toucher ou la deuxième action de toucher est détectée une fois, respectivement jusqu'à ce qu'une troisième action de toucher soit détectée.

3. Terminal mobile selon la revendication 1 ou 2, dans lequel l'organe de commande (180) est configuré pour commander à la pluralité d'écrans d'accueil de rester automatiquement affichés consécutivement à une première vitesse dans le premier ordre cyclique si la première action de toucher est détectée.

4. Terminal mobile selon la revendication 3, dans lequel l'organe de commande (180) est configuré pour commander à la pluralité d'écrans d'accueil de rester automatiquement affichés consécutivement à la première vitesse dans le deuxième ordre cyclique si la deuxième action de toucher est détectée pendant que la pluralité d'écrans d'accueil sont automatiquement affichés consécutivement dans le premier ordre cyclique.

5. Terminal mobile selon la revendication 3, dans lequel l'organe de commande (180) est configuré pour commander à la pluralité d'écrans d'accueil de rester automatiquement affichés consécutivement dans le premier ordre cyclique à une deuxième vitesse supérieure à la première vitesse, si la première action de toucher est détectée une deuxième fois, pendant que la pluralité d'écrans d'accueil sont affichés consécutivement dans le premier ordre cyclique.

6. Terminal mobile selon la revendication 1, dans lequel l'organe de commande (180) est configuré pour commander à la pluralité d'écrans d'accueil d'être affichés séquentiellement l'un après l'autre chaque fois que la première action de toucher ou la deuxième action de toucher est détectée.

7. Terminal mobile selon l'une quelconque des revendications 1 à 6, dans lequel l'organe de commande (180) est configuré pour commander à une liste d'écrans d'accueil (410), dans laquelle la pluralité d'écrans d'accueil sont listés, d'être affichée sur l'écran tactile (151) si une quatrième action de toucher est détectée sur l'écran tactile (151).

8. Terminal mobile selon la revendication 7, dans lequel l'organe de commande (180) est configuré pour commander à la pluralité d'écrans d'accueil d'être agencés dans la liste d'écrans d'accueil (410) dans le premier ordre cyclique ou dans le deuxième ordre cyclique.

9. Terminal mobile selon la revendication 8, dans lequel l'organe de commande (180) est configuré pour commander à la liste d'écrans d'accueil (410) de continuer de défiler à la première vitesse si la quatrième action de toucher est détectée.

10. Terminal mobile selon la revendication 9, dans lequel l'organe de commande (180) est configuré pour commander à la liste d'écrans d'accueil (410) de continuer de défiler à une deuxième vitesse supérieure à la première vitesse si la quatrième action de toucher est détectée une nouvelle fois pendant que la liste d'écrans d'accueil (410) est en cours de défilement à la première vitesse.

11. Terminal mobile selon l'une quelconque des revendications 1 à 10, dans lequel l'organe de commande (180) est configuré pour :
commander à une première région (401) et une deuxième région (402) d'être préalablement réglées sur l'écran tactile (151),
commander à la pluralité d'écrans d'accueil (A, B, C, D) d'être affichés séquentiellement dans la première région (401), et
commander à des objets préréglés d'être affichés dans la deuxième région (402).

12. Terminal mobile selon la revendication 11,
dans lequel l'organe de commande (180) est configuré pour commander à la pluralité d'écrans d'accueil de continuer d'être affichés consécutivement dans la première région (401) si la première action de toucher ou la deuxième action de toucher est détectée dans la première région (401), et
dans lequel l'organe de commande (180) est configuré pour commander aux objets préréglés de défiler à une première vitesse dans la deuxième région (402) si la première action de toucher est détectée dans la deuxième région (402).

13. Terminal mobile selon la revendication 12, dans lequel l'organe de commande (180) est configuré pour commander aux objets préréglés de défiler dans la deuxième région (402) à une deuxième vitesse supérieure à la première vitesse si la première action de toucher est détectée dans la deuxième région (402) une nouvelle fois.

14. Terminal mobile selon la revendication 12, dans lequel, si une cinquième action de toucher est détectée dans un espace vide de la deuxième région (402), l'organe de commande (180) est configuré pour
commander à la première région (401) de disparaître de l'écran tactile (151),
commander à la deuxième région (402) d'être étendue sur l'écran tactile (151), et
commander aux objets préréglés d'être affichés dans la deuxième région étendue (402).

15. Procédé de commande d'un terminal mobile, comprenant :
l'affichage (S41) de l'un d'une pluralité d'écrans d'accueil (A, B, C, D) sur un écran tactile (151), dans lequel la pluralité d'écrans d'accueil (A, B, C, D) sont agencés dans un premier ordre cyclique et dans un deuxième ordre cyclique, un écran d'accueil étant un agencement d'objets comprenant au moins l'un d'une icône de fichier, d'une icône d'application ou d'un widget ;
la détection (S42) d'une première action de toucher ou d'une deuxième action de toucher sur l'écran tactile (151),
**caractérisé par**
l'affichage séquentiel de la pluralité d'écrans d'accueil dans un ordre cyclique différent selon que la première action de toucher ou la deuxième action de toucher est détectée ;
dans lequel la pluralité d'écrans d'accueil sont séquentiellement affichés (S43) sur l'écran tactile (151) dans le premier ordre cyclique si la première action de toucher est détectée sur un écran tactile ; et
la pluralité d'écrans d'accueil sont séquentiellement affichés (D44) sur l'écran tactile (151) dans le deuxième ordre cyclique si la deuxième action de toucher est détectée sur l'écran tactile (151).
